(19) Europäisches Patentamt

European Patent Office

Office européen des brevets

(11) EP 0 816 729 B1

(12) **EUROPÄISCHE PATENTSCHRIFT**

(45) Veröffentlichungstag und Bekanntmachung des Hinweises auf die Patenterteilung:
**25.07.2001 Patentblatt 2001/30**

(51) Int Cl.7: **F16K 17/04**, F04D 15/00, F04B 49/24, F04B 49/035

(21) Anmeldenummer: **97109935.3**

(22) Anmeldetag: **17.06.1997**

(54) **Entlastungsventilanordnung**

Relief valve assembly

Dispositif de valve de décharge

(84) Benannte Vertragsstaaten:
**BE DE FR IT NL**

(30) Priorität: **03.07.1996 DE 19626566**

(43) Veröffentlichungstag der Anmeldung:
**07.01.1998 Patentblatt 1998/02**

(73) Patentinhaber: **URACA PUMPENFABRIK GMBH & CO. KG**
**D-72574 Bad Urach (DE)**

(72) Erfinder: **Daffner, Ernst**
**90455 Nürnberg (DE)**

(74) Vertreter: **Patentanwalts-Partnerschaft**
**Rotermund + Pfusch**
**Waiblinger Strasse 11**
**70372 Stuttgart (DE)**

(56) Entgegenhaltungen:
| | |
|---|---|
| CH-A- 204 955 | DE-A- 2 346 698 |
| FR-A- 2 044 537 | GB-A- 926 180 |
| GB-A- 1 298 677 | US-A- 2 619 979 |

**Beschreibung**

Die Erfindung betrifft eine Entlastungsventilanordnung gemäß dem Oberbegriff des Anspruchs 1. Eine derartige Entlastungsventilanordnung is aus der US-A-2 619 979 Patentschrift bekannt. Hochdruckspritzgeräte arbeiten heute mit sehr hohen Drücken, beispielsweise 800 bar. Dies ist gleichbedeutend damit, daß eine zum jeweiligen Hochdruckspritzgerät führende Schlauchleitung einem entsprechenden Druck ausgesetzt ist und durch die Druckbeanspruchung mehr oder weniger stark elastisch aufgeweitet wird. Wenn das Hochdruckspritzgerät bei Arbeitsunterbrechungen vorübergehend abgeschaltet wird, wirkt die Schlauchleitung nach Art eines Druckspeichers, d.h. innerhalb der Leitung bleibt der hohe Druck aufrechterhalten.

Es wurde bereits versucht, bei derartigen Arbeitsunterbrechungen des Hochdruckspritzgerätes die zugehörige Schlauchleitung durch fernsteuerbare Ventilanordnungen vom Hochdruck zu entlasten, um in Arbeitspausen eine erhöhte Sicherheit zu gewährleisten. Dabei ergab sich jedoch für die Fernsteuerung ein unerwünscht hoher konstruktiver Aufwand.

Die Entlastungsventilanordnung der eingangs angegebenen Art kann automatisch arbeiten und zeichnet sich aus durch vergleichsweise geringen konstruktiven Aufwand, insbesondere im Zusammenhang mit der Steuerung der Ventilanordnung.

Die Wirkung der Ventilanordnung beruht auf dem allgemeinen Gedanken, durch eine zwischen Druckquelle und Verbraucher bzw. HochdruckSpritzgerät geschaltete Drosselanordnung eingangsseitig des Verbrauchers eine charakteristische Druckänderung zu erzeugen, wenn der Verbraucher abgesperrt wird und die Strömung zum Verbraucher zum Stillstand kommt. Während sich bei strömendem Hochdruckmedium hinter der Drosselanordnung aufgrund strömungsdynamischer Effekte ein gegenüber dem Druck der Druckquelle verminderter Druck einstellt, ergibt sich bei abgesperrtem Verbraucher ein hydrostatischer Zustand mit der Folge, daß vor und hinter der Drosselstrecke Druckgleichheit vorhanden ist.

Die Aufgabe der Erfindung ist die Sicherheit der Entlastungsventilanordnung zu verbessern. Diese Aufgabe wird durch die kennzeichnenden Merkmale des 1 Anspruchs gelöst.

Um gewährleisten zu können, daß das Absperrventil nicht nur bei Absperrung des Verbrauchers unter Entlastung der Hochdruckleitung geöffnet, sondern bei erneuter Zuschaltung des Verbrauchers auch wiederum automatisch unter Zufuhr von Hochdruckmedium zum Verbraucher geschlossen wird, ist zweckmäßig vorgesehen, daß das geöffnete Absperrventil bzw. der Niederdruckanschluß Drosselwirkung haben, derart, daß die Druckquelle bei geöffnetem Absperrventil in der Eingangskammer relativ zu Atmosphäre bzw. zur Ausgangsseite des Verbrauchers einen niedrigen Überdruck aufrechterhalten kann, dessen Maß etwas größer ist als das Maß der zur Schließung des Absperrventiles notwendige Druckdifferenz zwischen Eingangs- und Ausgangskammer.

Gemäß einer bevorzugten Ausführungsform der Erfindung trennt der Differentialkolben die Eingangs- und Ausgangskammer voneinander ab.

Außerdem ist die Drosselanordnung bevorzugt am bzw. im Kolben angeordnet.

Im übrigen wird hinsichtlich bevorzugter Merkmale der Erfindung auf die Ansprüche sowie die nachfolgende Erläuterung der Zeichnung verwiesen, anhand der besonders bevorzugte Ausführungsformen beschrieben werden.

Dabei zeigt

Fig. 1    ein schematisiertes Schnittbild der erfindungsgegemäßen Entlastungsventilanordnung mit schaltplanartiger Darstellung der wesentlichen Teile einer Hochdruckspritzanordnung,

Fig. 2    ein Schnittbild einer abgewandelten Ausführungsform und

Fig. 3    ein Schnittbild einer konstruktiv besonders zweckmäßigen Ausführungsform.

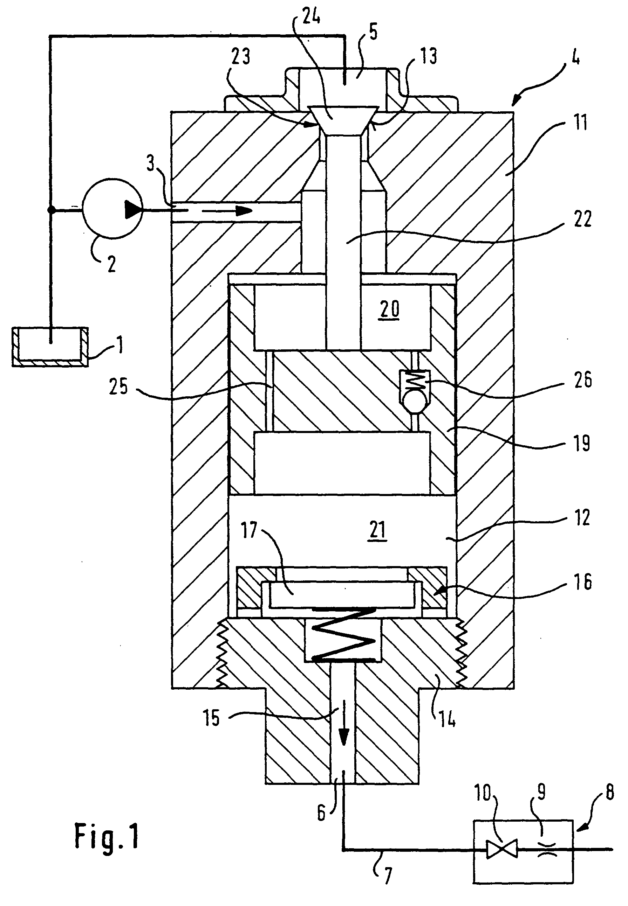

Gemäß Fig. 1 ist eine saugseitig mit einem Reservoir 1 für Spritzwasser verbundene, als Druckquelle dienende Hochdruckpumpe 2 druckseitig mit einem Eingang 3 einer Entlastungsventilanordnung 4 verbunden, welche einen mit dem Reservoir 1 kommunizierenden Niederdruckanschluß 5 sowie einen Ausgang 6 aufweist, der über einen Hochdruckschlauch 7 mit einem Verbraucher, und zwar einem Hochdruckspritzgerät 8, verbunden ist. Dieses Hochdruckspritzgerät 8 besitzt eine hydraulisch als Drossel wirkende Spritzdüse 9 bzw. eine entsprechende Spritzdüsenanordnung sowie zu deren Ein- und Abschaltung ein willkürlich bzw. manuell betätigbares Steuerventil 10.

Die Entlastungsventilanordnung 4 besitzt ein Gehäuse 11 mit einer gestuften Axialbohrung 12, in deren engeren Bereich der Eingang 3 radial einmündet. Axial zwischen dieser Einmündung und dem Niederdruckanschluß 5 bildet der engere, in Fig. 1 obere Abschnitt der Axialbohrung 12 eine Verengung, welche sich zum Niederdruckanschluß 5 hin unter Bildung eines ringförmigen Ventilsitzes 13 konisch erweitert.

Der bezüglich seines Querschnittes weitere, in Fig. 1 untere Abschnitt der Axialbohrung 12 wird am in Fig. 1 unteren Ende des Gehäuses 11 durch einen mit dem Hochdruckschlauch 7 verbundenen Boden 14 abgesperrt bzw. über eine Zentralbohrung 15 im Boden 14 mit dem Hochdruckschlauch 7 verbunden. Die Zentralbohrung 15 wird durch ein Schlauchbruchventil 16 gesteuert, welches einen plattenförmigen Ventilkörper 17 aufweist, der durch eine beispielsweise als Schraubendruckfeder ausgebildete Öffnungsfeder ständig in Richtung seiner dargestellten Offenlage gespannt wird und bei starker Strömung von Hydraulikmedium aus der Axialbohrung 12 zum Hochdruckschlauch 7 in seine den Weg zum Hochdruckschlauch 7 absperrende Schließlage gebracht wird.

Innerhalb des den großen Querschnitt aufweisenden Abschnittes der Axialbohrung 12 ist ein Kolben 19 verschiebbar angeordnet, welcher innerhalb der Axialbohrung 12 eine Eingangskammer 20 von einer Ausgangskammer 21 abtrennt.

Eine mit dem Kolben 19 fest verbundene Kolbenstange 22 ragt mit radialem Spiel durch die Verengung des in Fig. 1 oberen, engeren Abschnittes der Axialbohrung 12 hindurch und trägt an ihrem freien Ende einen mit dem Ventilsitz 13 ein Absperrventil 23 bildenden kegelstumpfförmigen Verschlußkörper 24.

Der Kolben 19 wird von einer axialen Drosselbohrung 25 oder von entsprechenden Drosselbohrungen durchsetzt. Außerdem trägt der Kolben 19 zumindest ein Rückschlagventil 26, welches nur für eine Strömung von der Ausgangskammer 21 zur Eingangskammer 20 durchlässig ist und mittels einer schwachen Feder od.dgl. ständig in Schließrichtung belastet sein kann.

Die in Fig. 1 dargestellte Entlastungsventilanordnung arbeitet wie folgt:

Auf den Kolben 19 sowie den Verschlußkörper 14 wirken in Fig. 1 nach oben gerichtete Kräfte $F_o$ sowie nach unten gerichtete Kräfte $F_s$, für welche (zumindest angenähert) gilt

$$F_o = p_{21} D^2 \pi/4$$

$$F_s = p_{20}(D^2 - d^2)\, \pi/4$$

wobei $p_{20}$ den Druck in der Eingangskammer 20, $p_{21}$ den Druck in der Ausgangskammer 21, D den Durchmesser des den Kolben 19 aufnehmenden Abschnittes der Axialbohrung 12 und d den Innendurchmesser des Ventilsitzes 13 bezeichnen.

Der Drosselwiderstand der Drosselbohrung 25 ist so bemessen bzw. an den Drosselwiderstand der Spritzdüse 9 angepaßt, daß sich bei geöffnetem Steuerventil 10 des Hochdruckspritzgerätes 8 und entsprechender Strömung des Spritzmittels zum Hochdruckspritzgerät 8 zwischen Eingangs- und Ausgangskammer 20 und 21 eine hinreichende Druckdifferenz einstellt, bei der die Kraft $F_s$ größer ist als die Kraft $F_0$. Sobald das Steuerventil 10 des Hochdruckspritzgerätes 8 geschlossen wird, kommt die Spritzmittelströmung zum Spritzgerät 8 zum Stillstand, d.h. es stellt sich ein hydrostatischer Zustand ein, mit der Folge, daß die Drücke $p_{20}$ und $p_{21}$ in der Eingangs- sowie der Ausgangskammer 20 und 21 sich aneinander angleichen. Damit wird die Kraft $F_o$ zwangsläufig größer als die Kraft $F_s$, und das Absperrventil 23 öffnet. Dementsprechend sinken die Drücke $p_{20}$ und $p_{21}$ in der Eingangs- sowie der Ausgangskammer 20 und 21 auf sehr geringe Werte ab.

Vorzugsweise ist vorgesehen, daß am Absperrventil 23, etwa durch die Verengung der Axialbohrung 12 unterhalb des Sitzes 13, ein begrenzter Drosselwiderstand auftritt, um gewährleisten zu können, daß der sich bei geöffnetem Absperrventil 23 in der Eingangskammer 20 (sowie der Ausgangskammer 21) einstellende Druck einen Wert hat, welcher geringfügig oberhalb des Wertes der Druckdifferenz liegt, die sich bei geschlossenem Absperrventil 23 und geöffnetem Steuerventil 10 des Hochdruckspritzgerätes 8 zwischen Eingangs- und Ausgangskammer 20 und 21 einstellt. Wenn jetzt nachfolgend das Steuerventil 10 des Hochdruckspritzgerätes 8 für eine erneute Spritzarbeit wieder geöffnet wird, bildet sich wieder eine Spritzmittelströmung zum Spritzgerät 8, so daß sich zwischen Eingangs- und Ausgangskammer 20 und 21 erneut eine Druckdifferenz einstellt und der Druck $p_{21}$ gegenüber dem Druck $p_{20}$ hinreichend stark abfällt, daß sich der Kolben 19 unter Schließung des Absperrventiles 23 in Fig. 1 in Abwärtsrichtung bewegt.

Das Rückschlagventil 26 hat bei der Ausführungsform der Fig. 1 im wesentlichen nur Sicherheitsfunktion. Wenn das Steuerventil 10 des Hochdruckspritzgerätes 8 schlagartig geschlossen werden sollte, tritt eine vom Hochdruckspritzgerät 8 zur Entlastungsventilanordnung 4 zurücklaufende Stoßwelle (sogenannter Joukowsky-Stoß) auf. Dieser Stoßwelle wird dann durch das Rückschlagventil 26 ein zusätzlicher Auslaß zur Eingangskammer 20 hin gegeben. Gleichzeitig wirkt das Rückschlagventil 26 dämpfend.

Bei stärkeren Leckagen am Hochdruckschlauch 7 tritt an der Zentralbohrung 15 des Bodens 14, d.h. am Anschluß des Hochdruckschlauches 7, eine stärkere Strömung auf, welche ausreicht, den Ventilkörper 17 des Schlauchbruchventiles 16 in seine Schließlage zu bringen. Damit kann unter allen Umständen erreicht werden, daß bei einer Schlauchleckage während der Spritzarbeit des Spritzgerätes 8 das Absperrventil 23 der Entlastungsventilanordnung 4 zu öffnen vermag. Zwar kann hierbei der Fall auftreten, daß sich das Schlauchbruchventil 16 nach Öffnung des Absperrventiles 23 erneut öffnet, mit der Folge, daß dann das Absperrventil 23 erneut schließt. Jedoch wird sich beim Schließen des Absperrventiles 23 das Schlauchbruchventil 16 aufgrund der dort wieder erhöht auftretenden Strömung sofort wieder schließen. Insgesamt kann somit nur eine begrenzte Strömung von Spritzmittel zum Schlauch 7 bzw. zum Spritzgerät 8 auftreten, und der Spritzmitteldruck bleibt auf relativ geringe Werte begrenzt. In der Regel muß jedoch nicht damit gerechnet werden, daß das Schlauchbruchventil 16 nach einem Schließen aufgrund einer Schlauchleckage nochmals öffnen wird. Denn bei geschlossenem Ventil 16 wird dessen Ventilkörper 17 auf einer sehr großen Fläche von hydraulischem Druck schließend beaufschlagt, d.h. auch der nach Öffnen des Absperrventiles 23 verbleibende geringe Hydraulikdruck zwischen Kolben 19 und Ventil 16 kann dessen Ventilkörper 17 in Schließlage halten.

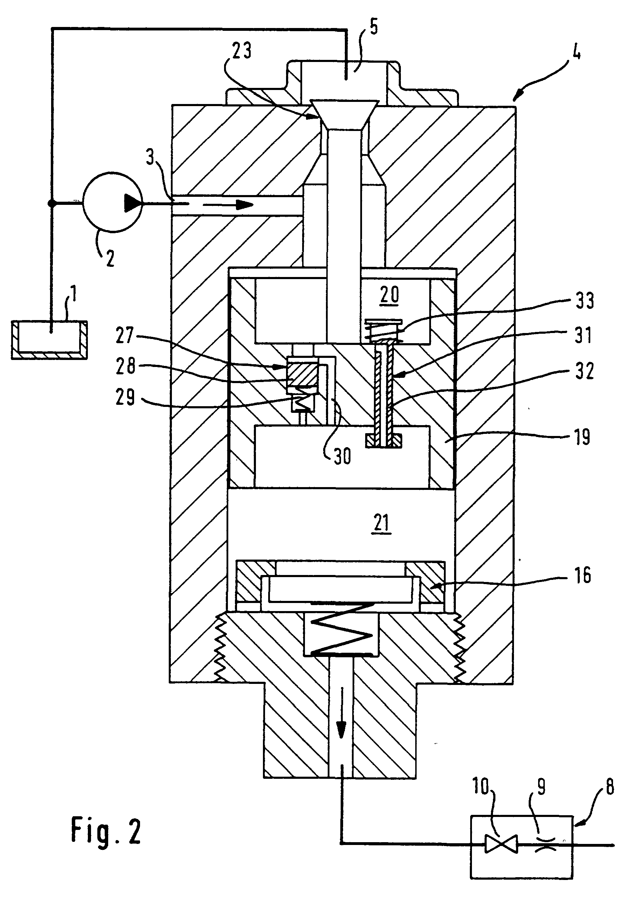

Die Ausführungsform der Fig. 2 unterscheidet sich von der Ausführungsform der Fig. 1 zunächst dadurch, daß anstelle einfacher Drosselbohrungen 25 zumindest eine differenzdruckgesteuerte Drossel 27 angeordnet ist. Diese Drossel 27 besitzt einen kolbenartigen Schieber 28, welcher auf seiner Eingangsstirnseite vom Druck $p_{20}$ in der Eingangskammer 20 und auf seiner anderen Stirnseite vom Druck $p_{21}$ in der Ausgangskammer 21 beaufschlagt und von einer Feder 29 in Richtung einer in Fig. 2 oberen Endlage gedrängt wird, in der ein die Eingangskammer 20 mit der Ausgangskammer 21 verbindender Durchlaß 30 abgesperrt wird. Sobald zwischen den Kammern 20 und 21 eine zur Verschiebung des Schiebers 28 gegen die Kraft der Feder 29 ausreichende Druckdifferenz vorliegt, stellt sich am Durchlaß 30 ein vom Schieber 28 gesteuerter, mehr oder weniger breiter Drosselspalt ein. Auf diese Weise paßt sich der Querschnitt der Drossel 27 in einer mehr oder weniger großen Bandbreite unterschiedlichen Drosselwiderständen der Spritzdüse 9 des Spritzgerätes 8 an, d.h. das Spritzgerät 8 kann ohne Beeinträchtigung der Funktion der Entlastungsventilanordnung 4 mit verschiedenen Düsen 9 bestückt werden, weil sich zwischen den Kammern 20 und 21 eine für die Funktion der Entlastungsventilanordnung ausreichende konstante Druckdifferenz $p_{20} - p_{21}$ unabhängig vom Drosselwiderstand der Spritzdüse 9 einstellt.

Im Übrigen ist gemäß der Fig. 2 ein Flip-Flop-Ventil 31 vorgesehen, welches im Beispiel der Fig. 2 als Schieberventil mit einem im wesentlichen rohrförmigen Schieber 32 ausgebildet ist, der durch eine schwache Öffnungsfeder 33 in Richtung seiner Offenstellung beaufschlagt wird. Dieses Flip-Flop-Ventil 31 schließt, sobald der Druck $p_{20}$ in der Eingangskammer 20 etwas größer ist als der Druck $p_{21}$ in der Ausgangskammer 21. Dies ist gleichbedeutend damit, daß das Flip-Flop-Ventil 31 bei Betrieb des Hochdruckspritzgerätes 8 geschlossen ist und normal nur öffnet, wenn das Steuerventil 10 des Spritzgerätes 8 geschlossen wird.

Darüber hinaus kann das Flip-Flop-Ventil 31 von seiner Öffnungsfeder 33 auch dann geöffnet gehalten werden, wenn bei abgesperrtem Spritzgerät 8 eine geringfügige Leckage am Hochdruckschlauch 7 bzw. zwischen Entlastungsventilanordnung 4 und Spritzgerät 8 auftreten sollte. Eine solche geringfügige Leckage kann nur zu ganz geringen Druckdifferenzen zwischen dem Druck in der Eingangskammer 20 und dem Druck in der Ausgangskammer 21 führen, da das Flip-Flop-Ventil 31 einen vergleichsweise geringen Drosselwiderstand aufweist. Dementsprechend vermag der Kolben 19 das Absperrventil 23 auch bei geringfügiger Leckage zu öffnen.

Im Zusammenwirken mit dem Ventil 27 übernimmt das Flip-Flop-Ventil 31 die Funktion der Drosselbohrungen 25 in Fig. 1.

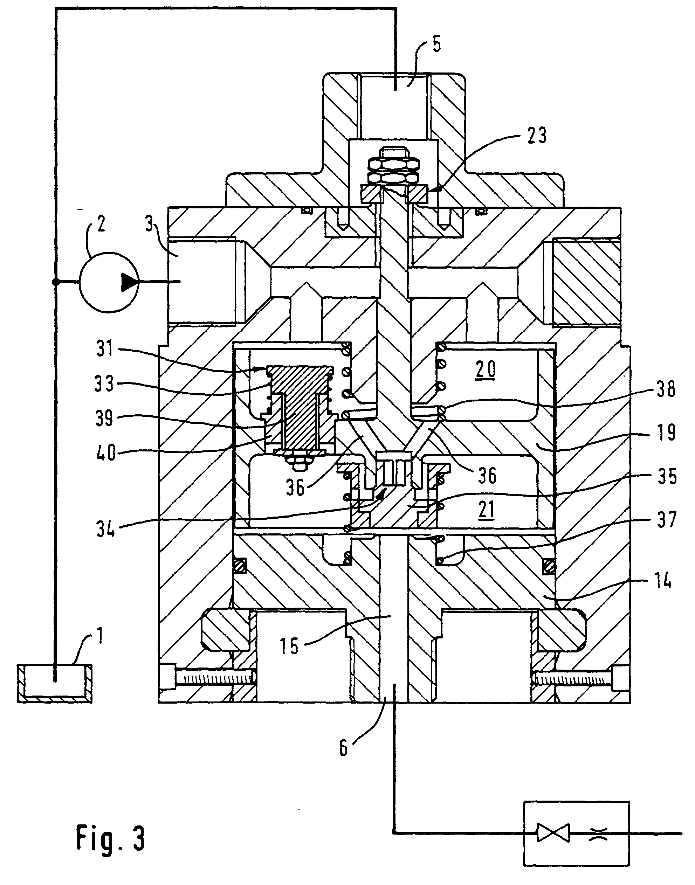

Die Ausführungsform der Fig. 3 unterscheidet sich von den vorangehend beschriebenen Ausführungsformen zunächst dadurch, daß eine zentral am Kolben 19 angeordnete druckgesteuerte Drossel 34 vorhanden ist, deren Steuerkörper 35 zusammen mit der Zentralbohrung 15 im Boden 14 als Schlauchbruchventil zusammenwirkt. Der Steuerkörper 35 besitzt auf seiner dem Kolben 19 zugewandten Stirnseite einen zum Kolben 19 hin geöffneten napfartigen Fortsatz, welcher am Kolben 19 in einer axialen Zentralbohrung verschiebbar geführt ist, die über Schrägbohrungen 36 mit der Eingangskammer 20 kommuniziert. Der genannte napfartige Fortsatz des Steuerkörpers 35 besitzt in seinen Wandungen axiale Schlitze, die den Innenraum des napfartigen Fortsatzes und damit auch die Schrägbohrungen 36 mit der Ausgangskammer 21 verbinden, wenn der Steuerkörper 35 relativ zum Kolben 19 aus der in Fig. 3 dargestellten Lage etwas in Abwärtsrichtung verschoben wird.

Der Steuerkörper 35 wird von einer am Boden 14 abgestützten Schraubendruckfeder 37 (mit geringer Kraft) gegen den Kolben 19 gespannt, welche hinreichend weich ist, derart, daß sich der Steuerkörper 35 mit einem ringförmigen Dichtungsbereich auf seiner Unterseite auf den Boden 14 koaxial zu dessen Zentralbohrung 15 aufsetzen kann, sobald - wie im Falle eines Schlauchbruches - eine sehr starke Strömung von der Ausgangskammer 21 in den Hochdruckschlauch 7 auftreten sollte, damit wird dann der Hochdruckschlauch 7 abgesperrt.

Der Kolben 19 wird von einer Schraubendruckfeder 38 in Fig. 3 in Abwärtsrichtung in eine Endlage gespannt, in der das Absperrventil 23 seine Schließlage einnimmt. Die Feder 38 besitzt eine ausreichende Stärke, um sicherzustellen, daß bei geöffnetem Absperrventil 23 und weiterhin arbeitender Pumpe 2 eingangsseitig des Absperrventiles 23 und damit in der Eingangskammer 20 noch ein gewisser Überdruck aufrechterhalten bleibt, welcher bei einer nachfolgenden Öffnung des Steuerventiles 10 des Spritzgerätes 8 die Erzeugung einer für eine Abwärtsbewegung des Kolbens 19 ausreichenden Druckdifferenz zwischen Eingangskammer 20 und Ausgangskammer 21 ermöglicht. Im Ergebnis stellt also die Schraubendruckfeder 38 sicher, daß das Absperrventil 23 eine gewisse Drosselwirkung zeigt.

Da die Feder 38 den Kolben 19 auch bei geöffnetem Absperrventil 23 noch in einem gewissen Abstand von der in Fig. 3 oberen Endlage des Kolbens 19 hält, kann der Kolben 19 beim Auftreten des oben angegebenen Joukowsky-Stoßes elastisch nachgeben.

Das Flip-Flcp-Ventil 31 der Fig. 3 hat eine grundsätzlich gleiche Funktion wie das Flip-Flop-Ventil 31 der Fig. 2. Es besitzt lediglich eine gegenüber Fig. 2 abweichende Ausbildung seines Schiebers 39, welcher auf seinem in einer Hülse 40 verschiebbar geführten Abschnitt axiale Nuten aufweist, die in der Offenlage des Flip-Flop-Ventiles eine Verbindung zwischen der Eingangs- und Ausgangskammer 20 und 21 ermöglichen. Die Schließstellung des Flip-Flop-Ventiles 31 in Fig. 3 wird dann erreicht, wenn der ringscheibenförmige Kopf des Schiebers 39 gegen die Kraft der Öffnungsfeder 33 gegen den zugewandten, als Ventilsitz ausgebildeten Stirnrand der Hülse 40 geschoben wird.

**Patentansprüche**

1. Entlastungsventilanordnung (4), welche eine von einer Druckquelle (2) zu einem absperrbaren Verbraucher (8) führende Leitung (7) bei Absperrung des Verbrauchers unter Druckentlastung mit einem Niederdruckanschluß (5) zu verbinden gestattet, mit

   - einer druckquellenseitigen Eingangskammer (20), die mit einer verbraucherseitigen Ausgangskammer (21) über eine Drosselanordnung (25,27,34) und mit dem Niederdruckanschluß (5) über ein Absperrventil (23) verbunden bzw. verbindbar ist, und
   - einer das Absperrventil (23) steuernden, doppeltwirkenden Verdränger bzw. Differentialkolbenanordnung (19,22,24), welche auf einer kleineren Wirkfläche vom Druck ($p_{20}$) in der Eingangskammer (20) in einer das Absperrventil (23) schließenden Richtung und auf einer größeren Wirkfläche vom Druck ($p_{21}$) in der Ausgangskammer (21) in einer das Absperrventil (23) öffnenden Richtung beaufschlagbar ist,

   **dadurch gekennzeichnet,**
   daß parallel zur Drosselanordnung (25,27,34) ein in Richtung der Eingangskammer (20) öffnendes Ventil (26,31) angeordnet ist, welches bei einem Überdruck in der Eingangskammer (20) gegenüber der Ausgangskammer (21) schließt.

2. Entlastungsventilanordnung nach Anspruch 1,
   **dadurch gekennzeichnet,** daß das geöffnete Absperrventil (23) bzw. der Niederdruckanschluß (5) Drosselwirkung haben, derart, daß die Druckquelle (2) bei geöffnetem Absperrventil (23) in der Eingangskammer (20) relativ zur Atmosphäre bzw. Ausgangsseite des Verbrauchers (8) einen niedrigen Überdruck aufrechterhalten kann, dessen Maß etwas größer ist als das Maß der zur Schließung des Absperrventiles (23) notwendigen Druckdifferenz ($p_{20}$-$p_{21}$) zwischen Eingangs- und Ausgangskammer (20,21).

3. Entlastungsventilanordnung nach Anspruch 2,
   **dadurch gekennzeichnet,** daß die Verdränger- bzw. Differentialkolbenanordnung (19,22,24) mittels einer Feder (38) in eine das Absperrventil (23) schließende Richtung belastet ist.

4. Entlastungsventilanordnung

nach einem der Ansprüche 1 bis 3,
**dadurch gekennzeichnet,**
daß ein Kolben (19) der Differentialkolbenanordnung (19,22,24) die Eingangs- und Ausgangskammer (20,21) voneinander abtrennt.

5. Entlastungsventilanordnung
   nach einem der Ansprüche 1 bis 4,
   **dadurch gekennzeichnet,**
   daß die Drosselanordnung (25,27,34) am bzw. im Kolben (19) angeordnet ist.

6. Entlastungsventilanordnung
   nach einem der Ansprüche 1 bis 5,
   **dadurch gekennzeichnet,**
   daß eine druckgesteuerte Drosselanordnung (27,34) vorhanden ist, welche öffnet, wenn in der Ausgangskammer (21) ein Unterdruck gegenüber der Eingangskammer (20) vorliegt bzw. auftritt, wobei vorzugsweise mit steigendem Unterdruck ein steigender Öffnungsquerschnitt freigegeben wird.

7. Entlastungsventilanordnung
   nach einem der Ansprüche 1 bis 6,
   **dadurch gekennzeichnet,**
   daß zwischen Ausgangskammer (21) und Hochdruckleitung (7) ein bei Leitungsbruch schließendes Ventil (16;35,14) angeordnet ist.

8. Entlastungsventilanordnung nach Anspruch 7,
   **dadurch gekennzeichnet,**
   daß ein Steuerkörper (35) der druckgesteuerten Drosselanordnung (34) eine die Verbindung zwischen Ausgangskammer (21) und Hochdruckleitung (7) schließende Endlage aufweist.

**Claims**

1. Relief valve arrangement (4) making it possible to connect a line (7) leading from a pressure source (2) to a user that can be shut off (8) with a low-pressure hookup (5) when the user is shut off, with

   - a pressure source-side inlet chamber (20), which is or can be connected with a user-side outlet chamber (21) via a flow restrictor (25, 27, 34), and with the low-pressure hookup (5) via a shut-off valve (23), and

   - a shut-off valve (23)-controlling, dual-action displacer or differential piston arrangement (19, 22, 24), which can be pressurized over a smaller active area ($p_{20}$) in the inlet chamber (20) in a direction that closes the shut-off valve (23), and over a larger active area ($p_{21}$) in the outlet chamber (21) in a direction that opens the shut-off valve (23),

characterized by the fact that a valve (26, 31) which opens in the direction of the inlet chamber (20) is arranged parallel to the flow restrictor (25, 27, 34), which closes given an excess pressure in the inlet chamber (20) relative to the outlet chamber (21).

2. Relief valve arrangement according to claim 1, characterized by the fact the opened shut-off valve (23) or low-pressure hookup (5) restrict flow in such a way that, with the shutoff valve (23) open in the inlet chamber (20), the pressure source (2) can maintain a low excess pressure relative to the atmosphere or outlet side of the user (8) that somewhat exceeds that of the pressure differential ($p_{20}$-$p_{21}$) between the inlet and outlet chamber (20, 21) necessary for closing the shut-off vale (23).

3. Relief valve arrangement according to claim 2, characterized by the fact that the displacer or differential piston arrangement (19, 22, 24) is loaded by a spring (38) in a direction that closes the shut-off valve (23).

4. Relief valve arrangement according to one of claims 1 to 3, characterized by the fact that a piston (19) in the differential piston arrangement (19, 22, 24) separates the inlet and outlet chambers (20, 21) from each other.

5. Relief valve arrangement according to one of claims 1 to 4, characterized by the fact that the flow restrictor (25, 27, 34) is arranged on or in the piston (19).

6. Relief valve arrangement according to one of claims 1 to 5, characterized by the fact that a pressure-controlled flow restrictor (27, 34) is present, which opens when a vacuum relative to the inlet chamber (20) is present or arises in the outlet chamber (21), wherein an increasing hole cross section is preferably released as the vacuum rises.

7. Relief valve arrangement according to one of claims 1 to 6, characterized by the fact that a valve (16; 35, 14) that closes given a break in the line is arranged between the outlet chamber (21) and high-pressure line (7).

8. Relief valve arrangement according to claim 7, characterized by the fact that a controller (35) in the pressure-controlled flow restrictor (34) has an end position that closes the connection between the outlet chamber (21) and high-pressure line (7).

## Revendications

1. Dispositif soupape de décharge (4) qui permet de relier une conduite (7) allant d'une source de pression (2) à un appareil d'utilisation arrêtable (8), en cas d'arrêt de l'appareil d'utilisation, à un raccord basse pression (5) avec décompression, comportant

- une chambre d'entrée côté source de pression (20) qui est reliée ou peut être reliée à une chambre de sortie côté appareil d'utilisation (21) par un dispositif d'étranglement (25, 27, 34) et au raccord basse pression (5) par une soupape d'arrêt (23), et
- un dispositif de déplacement ou à piston différentiel à double effet (19, 22, 24) commandant la soupape d'arrêt (23) et sur une petite surface effective duquel agit dans le sens de fermeture de la soupape d'arrêt (23) la pression (p20) dans la chambre d'entrée (20) et sur une grande surface effective duquel agit dans le sens d'ouverture de la soupape d'arrêt (23) la pression (p21) dans la chambre de sortie (21),

caractérisé par le fait
que parallèlement au dispositif d'étranglement (25, 27, 34) est placée une vanne (26, 31) s'ouvrant en direction de la chambre d'entrée (20) et qui se ferme en cas de surpression dans la chambre d'entrée (20) par rapport à la chambre de sortie (21).

2. Dispositif soupape de décharge selon la revendication 1, caractérisé par le fait que la soupape d'arrêt (23) ouverte et le raccord basse pression (5) ont un effet d'étranglement de façon telle que lorsque la soupape d'arrêt (23) est ouverte, la source de pression (2) puisse maintenir dans la chambre d'entrée (20), par rapport à l'atmosphère ou au côté sortie de l'appareil d'utilisation (8), une faible surpression de valeur un peu supérieure à celle de la différence de pression (p20-p21) entre la chambre d'entrée (20) et la chambre de sortie (21) nécessaire à la fermeture de la soupape d'arrêt (23).

3. Dispositif soupape de décharge selon la revendication 2, caractérisé par le fait que le dispositif de déplacement ou à piston différentiel (19, 22, 24) est chargé dans le sens de fermeture de la soupape d'arrêt (23) au moyen d'un ressort (38).

4. Dispositif soupape de décharge selon l'une des revendications 1 à 3, caractérisé par le fait qu'un piston (19) du dispositif à piston différentiel (19, 22, 24) sépare la chambre d'entrée (20) de la chambre de sortie (21).

5. Dispositif soupape de décharge selon l'une des revendications 1 à 4, caractérisé par le fait que le dispositif d'étranglement (25, 27, 34) est placé sur ou dans le piston (19).

**6.** Dispositif soupape de décharge selon l'une des revendications 1 à 5, caractérisé par le fait qu'il existe un dispositif d'étranglement commandé par pression (27, 34) qui s'ouvre lorsque dans la chambre de sortie (21) est présente ou apparaît une dépression par rapport à la chambre d'entrée (20), une section d'ouverture croissante étant de préférence libérée lorsque la dépression croît.

**7.** Dispositif soupape de décharge selon l'une des revendications 1 à 6, caractérisé par le fait qu'entre la chambre de sortie (21) et la conduite à haute pression (7) est placée une soupape (16 ; 35, 14) qui se ferme en cas de rupture de la conduite.

**8.** Dispositif soupape de décharge selon la revendication 7, caractérisé par le fait qu'un corps de commande (35) du dispositif d'étranglement commandé par pression (34) présente une position extrême qui coupe la liaison entre la chambre de sortie (21) et la conduite à haute pression (7).

Fig.1

Fig. 2

Fig. 3